# DEMANDE DE BREVET EUROPEEN

(11) **EP 4 678 446 A1**
(43) Date de publication de la demande: **14.01.2026**
(21) Numéro de dépôt: 25187511.8
(22) Date de dépôt: 04.07.2025
(51) Int. Cl.: B60K 17/16, B60K 17/35, F16H 48/08, F16H 48/24, F16H 48/30, F16H 48/38

(54) **MODULE DE DIFFÉRENTIEL**

(30) Priorité: 08.07.2024 FR 2407450
(71) Demandeur: VALEO EMBRAYAGES, 80009 Amiens (FR)
(72) Inventeur: LEBAS, Gilles, 80009 AMIENS (FR); VIOLA, Paolo, 80009 AMIENS (FR); PATAUT, Pierre, 80009 AMIENS (FR)
(74) Mandataire: Valeo Powertrain Systems

(57) **Abrégé**

L'invention concerne un module de différentiel (2) ayant un premier axe de rotation (X1) et comprenant :
- un porte-satellite (9) ;
- un pignon satellite (11) monté pivotant sur le porte-satellite (9) ;
- un premier et un deuxième pignons planétaires (12,13) pivotants autour du premier axe de rotation (X1) ;
- un premier et un deuxième arbres d'entraînement de roue (3,4) , le premier arbre d'entraînement de roue (3) étant lié en rotation au premier pignon planétaire (12) ; et
- un baladeur (8) mobile entre deux positions axiales ;
une première liaison par coopération de formes étant aménagée entre le baladeur et le deuxième pignon planétaire, la première liaison par coopération de formes étant configurée de façon à ce que le baladeur soit lié en permanence en rotation au deuxième pignon planétaire et coulisse axialement entre les deux positions axiales.

## Description

### Domaine technique

La présente invention concerne un module de différentiel d'un système de transmission pour un véhicule.

### Arrière-plan technologique

Les systèmes de transmission comportant un module de différentiel visent à transmettre et distribuer un couple provenant d'un moteur vers deux arbres d'entraînement de roue d'un essieu du véhicule. Le module de différentiel comporte un élément d'entrée destiné à être entraîné par un moteur et un élément de sortie destiné à entraîner l'un et/ou l'autre des deux arbres d'entraînement de roue de l'essieu du véhicule. De façon à rendre sélectivement libres ou motrices les roues du véhicule, le module de différentiel peut comporter les moyens d'accouplement apte à sélectivement accoupler l'élément d'entrée à l'élément de sortie et/ou à sélectivement accoupler l'élément de sortie à l'un des deux arbres d'entraînement de roue.

Le document EP0241382 décrit notamment un tel module de différentiel où des moyens d'accouplement comprennent un baladeur constamment solidaire en rotation à l'un des deux arbres d'entraînement de roue, le baladeur occupant trois positions : une première position où le baladeur est couplé à un tronçon d'arbre solidaire d'un élément de sortie du module de différentiel, une deuxième position où le baladeur est découplé du tronçon d'arbre et une troisième position où le baladeur est solidaire en rotation d'un élément d'entrée du module de différentiel. Les documents CN116658589A, FR1001390A et JP5875128B2 décrivent également un module de différentiel comprenant un baladeur coopérant d'une part avec l'un des deux arbres d'entraînement de roue et d'autre part avec un élément de sortie du différentiel.

L'invention vise à améliorer ce type de dispositif, notamment en simplifiant et en rendant plus compacte la structure des moyens d'accouplement et en y apportant des fonctionnalités supplémentaires.

### Résumé

Dans tout ce qui suit, les adjectifs numéraux ordinaux sont utilisés pour différencier les caractéristiques. Ils ne définissent pas la position d'une caractéristique. Par conséquent, par exemple, une troisième caractéristique d'un produit ne signifie pas que le produit possède une première et/ou une deuxième caractéristique.

L'invention a pour objet un module de différentiel pour un système de transmission d'un véhicule, le module de différentiel ayant un premier axe de rotation et comprenant :
- un porte-satellite apte à recevoir un couple fourni, directement ou indirectement, par un moteur de traction ;
- au moins un pignon satellite monté pivotant sur le porte-satellite ;
- un premier et un deuxième pignons planétaires pivotants autour du premier axe de rotation ;
- un premier et un deuxième arbres d'entraînement de roue, le premier arbre d'entraînement de roue étant lié en rotation au premier pignon planétaire ; et
- un baladeur mobile axialement suivant le premier axe de rotation ;

une première liaison par coopération de formes étant aménagée entre le baladeur et le deuxième pignon planétaire, la première liaison par coopération de formes étant configurée de façon à ce que le baladeur soit lié en permanence en rotation au deuxième pignon planétaire et de façon à ce que le baladeur coulisse axialement par rapport au deuxième pignon planétaire entre les au moins deux positions axiales ;
une deuxième liaison par coopération de formes étant aménagée entre le baladeur et le deuxième arbre d'entraînement de roue de façon à assurer sélectivement :
   - un couplage du deuxième pignon planétaire avec le deuxième arbre d'entraînement de roue dans une première position axiale du baladeur, dite position connectée ; et
   - un découplage du deuxième arbre d'entraînement de roue dans une deuxième position axiale du baladeur, dite position déconnectée.

L'invention a pour objet un module de différentiel pour un système de transmission d'un véhicule, le module de différentiel ayant un premier axe de rotation et comprenant :
- un porte-satellite apte à recevoir un couple fourni, directement ou indirectement, par un moteur de traction ;
- au moins un pignon satellite monté pivotant sur le porte-satellite ;
- un premier et un deuxième pignons planétaires pivotants autour du premier axe de rotation ;
- un premier et un deuxième arbres d'entraînement de roue, le premier arbre d'entraînement de roue étant lié en rotation au premier pignon planétaire ; et
- un baladeur mobile axialement suivant le premier axe de rotation ;
une première liaison par coopération de formes étant aménagée entre le baladeur et le deuxième pignon planétaire, la première liaison par coopération de formes étant configurée de façon à ce que le baladeur soit lié en permanence en rotation au deuxième pignon planétaire et de façon à ce que le baladeur coulisse axialement par rapport au deuxième pignon planétaire entre les au moins deux positions axiales.

Dans l'architecture du module de différentiel suivant cette dernière caractéristique, le baladeur coopère directement et en permanence avec le deuxième pignon planétaire, contrairement à une architecture courante de l'art antérieur où un tronçon d'arbre est nécessaire pour relier le baladeur au deuxième pignon planétaire. Cette architecture est de ce fait plus simple et économique.

Au sens de la présente invention :
- « axial » signifie « parallèle à au premier axe de rotation» ;
- « radial » signifie « le long d'un axe appartenant à un plan orthogonal au premier axe de rotation et coupant ce premier axe de rotation » ;
- les termes « externe » et « interne » sont utilisés pour définir la position relative d'un composant ou d'une portion de composant par rapport à l'axe de rotation pour lequel il est concentrique, un composant proche dudit axe est ainsi qualifié d'interne par opposition à un composant externe situé radialement en périphérie ;
- deux pièces sont dites « liées en rotation » ou « couplées » lorsqu'elles sont assemblées de façon à ne pas tourner l'une par rapport à l'autre. Autrement dit, il s'agit d'une liaison solidaire en rotation, présentant éventuellement un faible jeu tel qu'un jeu de cannelure. Cette liaison solidaire en rotation peut être réalisée de la première pièce sur la deuxième pièce directement ou par l'intermédiaire d'une ou plusieurs pièces intermédiaires.

Chaque liaison par coopération de formes de la présente invention comporte une première forme aménagée sur le baladeur et une deuxième forme complémentaire aménagée sur un autre composant de manière à ce que ledit composant coopère en rotation avec le baladeur par la ladite liaison par coopération de formes.

Selon une caractéristique supplémentaire de l'invention, la première liaison par coopération de formes comprend une cannelure mâle aménagée sur le baladeur et une cannelure femelle aménagée sur le deuxième pignon planétaire.

Selon une caractéristique supplémentaire de l'invention, une surface du porte-satellite assure un centrage radial d'une surface du baladeur.

Ces deux dernières caractéristiques permettent d'assurer un guidage axial suffisant du baladeur sur la totalité de son déplacement.

Selon une caractéristique supplémentaire de l'invention, un moyen de guidage radial et axial est aménagé entre le baladeur et le porte-satellite, le moyen de guidage comprenant un palier ou un revêtement de glissement ou un roulement.

Cette dernière caractéristique permet d'assurer un guidage axial suffisant du baladeur sur la totalité de son déplacement, tout en limitant les frottements et donc les efforts fournis par l'actionneur pour déplacer le baladeur dans les quatre positions.

Selon une caractéristique supplémentaire de l'invention, une deuxième liaison par coopération de formes est aménagée entre le baladeur et le deuxième arbre d'entraînement de roue de façon à assurer sélectivement :
- un couplage du deuxième pignon planétaire avec le deuxième arbre d'entraînement de roue dans une première position axiale du baladeur, dite position connectée ; et
- un découplage du deuxième arbre d'entraînement de roue dans une deuxième position axiale du baladeur, dite position déconnectée.

Dans la position connectée, il est possible de transmettre un couple entre le moteur de traction et les premier et deuxième arbres d'entraînement de roue, en exerçant la fonction de différentiel autorisant des vitesses de rotation différentes pour les deux arbres d'entraînement de roue. Ce mode de fonctionnement est utilisé notamment lorsque le véhicule évolue dans un virage.

Dans la position déconnectée, la transmission de couple entre le moteur de traction et les premier et deuxième arbres d'entraînement de roue est déconnectée. Ce mode de fonctionnement est utilisé notamment dans les phases d'utilisation du véhicule où l'entraînement des roues d'un essieu n'est pas nécessaire. Ceci permet d'améliorer le rendement global de la ligne de transmission du véhicule en supprimant des pertes mécaniques associées à la rotation des différents composants inutilisés.

Selon une caractéristique supplémentaire de l'invention, la deuxième liaison par coopération de formes comprend une deuxième denture aménagée dans une cavité du baladeur recevant une portion du deuxième arbre d'entraînement de roue, la deuxième denture étant de préférence de type interne orientée radialement.

Selon une caractéristique supplémentaire de l'invention, une troisième liaison par coopération de formes est configurée pour être aménagée entre le baladeur et un bâti fixe, notamment un carter, de façon à assurer sélectivement un couplage du deuxième pignon planétaire avec le bâti fixe dans une troisième position axiale du baladeur dite position parking, la troisième liaison par coopération de formes comprenant une troisième denture aménagée sur le baladeur, la troisième denture étant de préférence de type crabot orientée en saillie axialement.

Dans la position parking, le mouvement du deuxième arbre d'entraînement de roue est totalement bloqué. Ce mode de fonctionnement est notamment utilisé de façon à assurer l'immobilisation du véhicule en situation de stationnement.

Les dentures de type crabot sont un moyen d'accouplement de conception simple et robuste qui permet un couplage / découplage rapide du baladeur.

Selon un aspect de l'invention, dans une quatrième position axiale du baladeur dite position bloquée, une quatrième liaison par coopération de formes est configurée pour assurer sélectivement un couplage du deuxième pignon planétaire avec le premier arbre d'entraînement de roue, la quatrième liaison par coopération de formes comprenant une quatrième denture aménagée sur le baladeur, la quatrième denture étant de préférence de type crabot orientée en saillie axialement.

Dans la position bloquée, le mouvement relatif entre le premier et le deuxième pignon planétaire est bloqué, et les premier et deuxième arbres d'entraînement de roue sont forcés de tourner à la même vitesse que le porte-satellite. Ce mode de fonctionnement est utilisé notamment afin d'éviter des risques de perte d'adhérence ou d'enlisement du véhicule lorsque les deux roues opposées du véhicule font face à une différence de frottement sur la route.

De plus, dans ce mode de réalisation, il est rendu possible de faire coulisser le baladeur axialement à travers le deuxième pignon planétaire pour pouvoir accéder directement au premier arbre d'entraînement de roue et ainsi réaliser le couplage en position bloquée de manière simple et compacte. Le couplage du baladeur peut se faire ici aussi bien entre le baladeur et le premier arbre d'entraînement de roue, qu'entre le baladeur et le premier pignon satellite.

Selon un autre aspect de l'invention, dans la quatrième position axiale du baladeur dite position bloquée, une quatrième liaison par coopération de formes est configurée pour assurer sélectivement un couplage du deuxième pignon planétaire avec le porte-satellite, la quatrième liaison par coopération de formes comprenant une quatrième denture aménagée sur le baladeur, la quatrième denture étant de préférence de type crabot orientée en saillie axialement.

Selon une caractéristique supplémentaire de l'invention, toutes les dentures de type crabot précitées peuvent être des dentures de type « anti-lâcher ».

De manière connue de l'état de l'art, les dentures de type crabot anti-lâcher présentent des dépouilles et contre-dépouilles avec des angles choisis pour assurer que les dentures ne peuvent pas se désengager spontanément pendant qu'elles transmettent un couple, permettant d'éviter une déconnexion intempestive.

D'une manière générale, toutes les dentures précitées peuvent être dans d'autres modes de réalisation de l'invention de type axiales ou radiales, sans angle, ou avec un angle favorisant l'engagement des dentures pendant qu'elles transmettent un couple, ou au contraire avec un angle favorisant le désengagement des dentures pendant qu'elles transmettent un couple.

Selon un aspect de l'invention, les quatre positions axiales du baladeur se succèdent dans une première séquence déterminée à mesure que le baladeur s'éloigne suivant une direction opposée au premier pignon planétaire, la position bloquée étant la plus proche du premier pignon planétaire, la position connectée succédant ensuite à la position bloquée, la position déconnectée succédant ensuite à la position connectée et la position parking succédant ensuite à la position déconnectée.

Cette première séquence déterminée permet de rendre plus efficace et plus sûr le passage d'une position à l'autre. En effet, le passage en position parking est réalisé avantageusement à partir de la position déconnectée pour limiter la vitesse relative entre le baladeur et le bâti fixe et donc réduire les chocs et les surcouples dans la phase de couplage.

De plus, la position connectée correspondant au mode de fonctionnement le plus fréquemment utilisé sur véhicule, il est avantageux de placer cette position connectée entre la position bloquée et la position déconnectée de façon à limiter la distance et le temps de déplacement du baladeur pour atteindre l'une ou l'autre de ces deux dernières positions.

Selon un autre aspect de l'invention, les quatre positions axiales du baladeur se succèdent dans une deuxième séquence déterminée à mesure que le baladeur s'éloigne suivant une direction opposée au premier pignon planétaire, la position bloquée étant la plus proche du premier pignon planétaire, la position déconnectée succédant ensuite à la position bloquée, la position connectée succédant ensuite à la position déconnectée et la position parking succédant ensuite à la position connectée.

Selon une caractéristique supplémentaire de l'invention, un nombre de positions actives compris entre deux et quatre est choisi parmi les quatre positions du baladeur de façon à ce que seules les positions actives ainsi choisies soient utilisées pendant le fonctionnement du module de différentiel sur véhicule, le nombre de positions choisies étant prédéterminé en fonction des besoins de chaque application véhicule.

En effet, la disposition des quatre positions précitées permet également de pouvoir utiliser tel quel le module de différentiel selon l'invention même si, en fonction des besoins d'une application véhicule, la position blocage et/ou la position parking ne sont pas nécessaires.

Selon une caractéristique supplémentaire de l'invention, le baladeur est agencé pour être déplacé par un actionneur, le baladeur comportant notamment une gorge annulaire coopérant avec une fourchette liée à l'actionneur.

L'invention permet de pouvoir déplacer le baladeur dans les quatre positions précitées avec un actionneur unique.

Selon une caractéristique supplémentaire de l'invention, un premier ressort d'assistance est agencé pour exercer axialement un effort sur le baladeur de manière à favoriser le passage en position connectée et/ou le passage en position bloquée.

Selon une caractéristique supplémentaire de l'invention, un deuxième ressort d'assistance est agencé pour exercer axialement un effort sur le baladeur de manière à favoriser le passage en position parking.

Pour les deux caractéristiques précédentes, « favoriser le passage » est à entendre par le fait que, lors du déplacement du baladeur d'une position à une autre, lorsqu'il arrive que les dentures conjuguées se présentent en décalage angulaire relatif de sorte que leur engagement n'est pas possible immédiatement, le ressort d'assistance se comprime et exerce un effort sur le baladeur. Dès que la rotation relative des dentures place ces dentures dans une position d'engagement mutuel, le ressort en se détendant aide le baladeur à se positionner dans sa nouvelle position. Le ressort permet ainsi d'accélérer l'engagement mutuel des dentures conjuguées, ce qui améliore la dynamique du module de différentiel. En effet le ressort peut déplacer le baladeur de connexion plus rapidement que ne le ferait un actionneur seul car l'inertie du ressort est plus faible.

Selon un premier aspect de l'invention :
- le baladeur comporte deux parties axialement mobiles l'une par rapport à l'autre ;
- la première partie étant configurée pour coopérer avec l'actionneur ;
- la deuxième partie étant configurée pour assurer sélectivement le couplage dans les positions bloquée, connectée, déconnectée et parking ; et
- le premier et le deuxième ressort d'assistance étant interposés axialement entre la première et la deuxième partie.

Selon une caractéristique supplémentaire de l'invention, la première partie du baladeur est centrée radialement sur la deuxième partie du baladeur.

Selon une caractéristique supplémentaire de l'invention, la première partie du baladeur est liée en rotation à la deuxième partie du baladeur, notamment par des dentures.

Selon une caractéristique supplémentaire de l'invention, le premier ressort d'assistance est disposé axialement d'un premier côté de la première partie du baladeur et le deuxième ressort d'assistance est disposé axialement d'un deuxième côté de la première partie du baladeur, le premier côté étant plus proche axialement du premier pignon planétaire que le deuxième côté.

Selon un autre aspect de l'invention, le premier ressort d'assistance et le deuxième ressort d'assistance sont interposés axialement entre le baladeur et une fourchette liée à l'actionneur.

Selon une caractéristique supplémentaire de l'invention, le premier ressort d'assistance et/ou le deuxième ressort d'assistance sont de type ressort hélicoïdal ou rondelle ondulée ou rondelle tronconique de type Belleville ou ressort en matière élastomère.

L'invention concerne en outre un système de transmission comprenant le module de différentiel selon l'invention, un bâti fixe notamment un carter, un jeu d'engrenages configuré pour faire coopérer en rotation le module de différentiel avec un moteur de traction, et un actionneur configuré pour déplacer le baladeur.

Le module de différentiel selon l'invention peut présenter l'une ou l'autre des caractéristiques décrites ci-dessous combinées entre elles ou prises indépendamment les unes des autres :
- l'au moins un pignon satellite et les deux pignons planétaires peuvent être des pignons coniques ;
- l'au moins un pignon satellite est monté pivotant sur un axe cylindrique fixée au porte-satellite ;
- l'au moins un pignon satellite et les deux pignons planétaires peuvent être réalisés sous forme d'engrenages cylindriques, notamment des engrenages à denture droite, notamment des engrenages agencés sous la forme de train épicycloïdal ;
- le module de différentiel peut être de type différentiel à glissement limité dans lequel un dispositif de friction est agencé pour créer un écart de couple entre deux roues liées au module de différentiel, notamment dans le mode connecté ;
- l'au moins un pignon satellite et les deux pignons planétaires peuvent être réalisés sous forme d'engrenages de type vis sans fin, le module de différentiel pouvant être notamment de type « Torsen » ;
- le nombre de pignons satellites est compris entre un et douze ;
- le porte-satellite peut être réalisé sous forme d'un boîtier comportant une cavité interne dans lequel sont logés l'au moins un pignon satellite et les deux pignons planétaires ;
- les deux pignons planétaires sont supportés et guidés en rotation par le boîtier ;
- le boîtier peut être réalisé en plusieurs parties, fixées entre elles par un moyen de fixation, notamment par soudage ou par vissage ou par rivetage ;
- une roue dentée est fixée au porte-satellite, la roue dentée recevant, via un jeu d'engrenages, le couple fourni par un moteur de traction.

Le système de transmission selon l'invention peut présenter l'une ou l'autre des caractéristiques décrites ci-dessous combinées entre elles ou prises indépendamment les unes des autres :
- le bâti fixe peut être un carter du système de transmission ;
- le carter du système de transmission peut être destiné à loger le jeu d'engrenages et le module de différentiel ;
- le jeu d'engrenages peut comporter des engrenages cylindriques à trains parallèles ;
- le jeu d'engrenages peut comporter au moins un train épicycloïdal ;
- l'actionneur peut être de type mécanique, électromécanique, électromagnétique, pneumatique ou encore hydraulique ;
- l'actionneur peut comporter un système de rampe à billes ou de vis à billes ou un système de tambour de sélection.

L'invention concerne en outre un groupe motopropulseur comprenant un moteur de traction et un système de transmission de couple tel que défini précédemment.

Le bâti fixe peut être un carter du groupe motopropulseur, notamment un carter du moteur de traction.

### Brève description des figures

La figure 1 illustre une vue en coupe schématique d'un groupe motopropulseur comprenant un module de différentiel selon l'invention.
La figure 2 est une vue en perspective coupée du module de différentiel selon un premier mode de réalisation de l'invention.
La figure 3 est une section en coupe du module de différentiel en position connectée selon un premier mode de réalisation de l'invention.
La figure 4 est une section en coupe du module de différentiel en position bloquée selon un premier mode de réalisation de l'invention.
La figure 5 est une section en coupe du module de différentiel en position parking selon un premier mode de réalisation de l'invention.
La figure 6 est une section en coupe du module de différentiel en position déconnectée selon un premier mode de réalisation de l'invention.
La figure 7 est une vue en perspective coupée du baladeur selon un premier mode de réalisation de l'invention.
La figure 8 est une vue en perspective coupée du module de différentiel selon un deuxième mode de réalisation de l'invention.
La figure 9 est une section en coupe du module de différentiel en position bloquée selon un deuxième mode de réalisation de l'invention.
La figure 10 est une vue en perspective coupée du baladeur selon un deuxième mode de réalisation de l'invention.
La figure 11 est une section en coupe du module de différentiel en position bloquée selon un troisième mode de réalisation de l'invention.

### Description des modes de réalisation

Sur toutes les figures, les éléments identiques ou assurant la même fonction portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

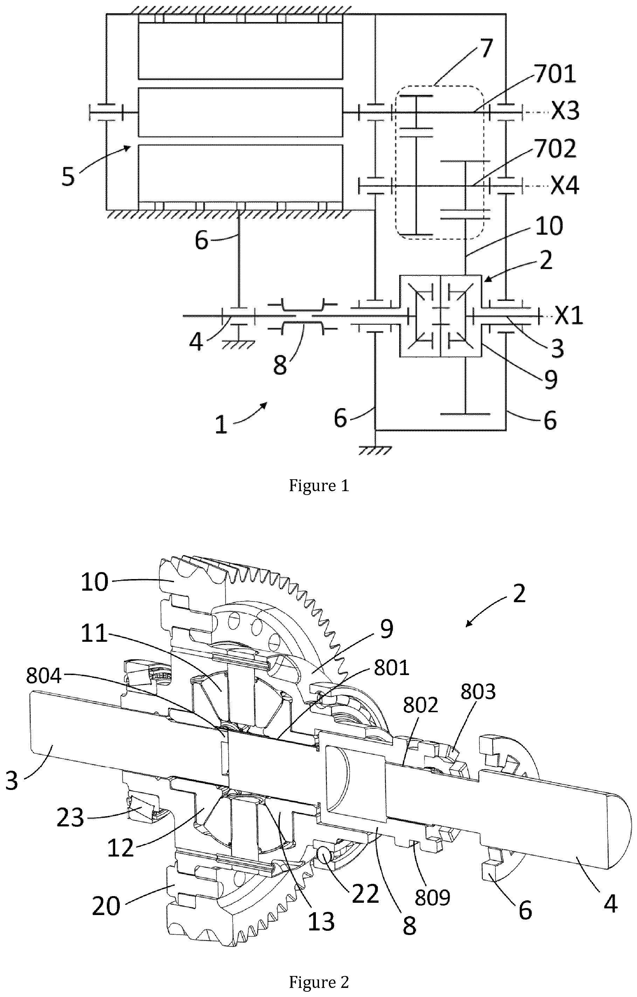

La figure 1 illustre schématiquement un groupe motopropulseur 1 selon un mode de réalisation de l'invention. Le groupe motopropulseur 1 comporte un module de différentiel 2 destiné à entraîner en rotation deux arbres d'entraînement de roues 3 et 4 d'un essieu d'un véhicule et configuré pour distribuer un couple provenant d'un moteur de traction 5 vers les arbres d'entraînement de roues 3, 4, en les autorisant à tourner à des vitesses différentes.

Un tel module de différentiel 2 est par exemple destiné à un véhicule hybride. Ainsi, le groupe motopropulseur 1 est, par exemple, apte à transmettre un couple d'un moteur électrique vers un essieu arrière ou avant du véhicule tandis qu'un autre groupe motopropulseur accouplé à un autre moteur, tel qu'un moteur thermique, permet de générer un couple et de le transmettre entre cet autre moteur et les arbres d'entraînement de roues 3,4 de l'autre essieu du véhicule. Une autre configuration de groupe motopropulseur pour un véhicule hybride peut consister à l'association d'un moteur thermique et d'un moteur électrique tous deux associés pour transmettre un couple aux arbres d'entraînement de roues 3,4 d'un même essieu. Le véhicule peut également être intégralement électrique.

Comme visible sur la figure 1, le groupe motopropulseur 1 comprend un carter de transmission 6 dans lequel sont logés un moteur de traction 5, un module de différentiel 2 et un jeu d'engrenages 7. La structure du carter de transmission 6 peut être monobloc ou composée de plusieurs sous-parties. Le moteur de traction 5 comprend à sa sortie un arbre tournant autour d'un troisième axe de rotation X3. Le jeu d'engrenages 7 coopère cinématiquement en rotation avec d'une part l'arbre du moteur de traction 5 et d'autre part avec le module de différentiel 2 pour former un ou plusieurs rapports de réduction de vitesse.

Dans l'exemple non limitatif de la figure 1, le jeu d'engrenages 7 comporte un premier train d'engrenages cylindriques 701, coaxial au troisième axe de rotation X3, et coopérant cinématiquement en rotation avec un deuxième train d'engrenages cylindriques 702, coaxial à un quatrième axe de rotation X4 parallèle au troisième axe de rotation X3, pour former un premier rapport de réduction. Le deuxième train d'engrenages cylindriques 702 coopère cinématiquement en rotation avec une roue dentée 10 solidaire d'un boîtier 9 du module de différentiel 2 pour former un second rapport de réduction.

Dans cet exemple, le moteur de traction 5 peut être un moteur électrique ou thermique. Un autre moteur électrique ou thermique (non représenté) peut en plus être accouplé avec l'un des engrenages du jeu d'engrenages 7.

Les figures 1 à 6 illustrent un module de différentiel 2 selon un premier mode de réalisation de l'invention, le module de différentiel 2 ayant un premier axe de rotation X1 et comprenant un porte-satellite 9 apte à recevoir un couple fourni directement ou indirectement par un moteur de traction 5, au moins un pignon satellite 11 monté pivotant sur le porte-satellite 9, un premier et un deuxième pignons planétaires 12,13 pivotants autour du premier axe de rotation X1 et s'engrenant avec l'au moins un pignon satellite 11, un premier et un deuxième arbres d'entraînement de roue 3,4 , le premier arbre d'entraînement de roue 3 étant lié en rotation au premier pignon planétaire 12, et un baladeur 8 mobile axialement suivant le premier axe de rotation X1.

Dans ce mode de réalisation, le porte-satellite 9 peut être sous forme d'un boîtier formant une cavité qui loge et supporte les pignons satellites 11 et les pignons planétaires 12,13. Les pignons satellites 11 et les premier et deuxième pignons planétaires 12,13 sont ici des pignons coniques. Une tige cylindrique 902 peut être fixée au boîtier 9, les pignons satellites 11 étant montés pivotants autour du deuxième axe de rotation X2 sur ladite tige cylindrique 902. Les pignons satellites 11 peuvent être au nombre de un à quatre, le choix d'un nombre de quatre présentant l'intérêt de pouvoir transmettre le couple avec des pignons satellites de plus petites dimensions. Le deuxième axe de rotation X2 est perpendiculaire au premier axe de rotation X1. Le premier pignon planétaire 12 peut être monté et lié en rotation sur l'arbre d'entraînement de roue 3 via une cannelure 1201. La roue dentée 10 peut être fixée au porte-satellite 9 par des vis de fixation 20. Le porte-satellite 9 peut être supporté par le carter de transmission 6 via un premier palier 22, ici un roulement à billes, et un deuxième palier 23, ici un roulement à rouleaux coniques.

Le module de différentiel 2 décrit ci-dessus correspond à une conception de différentiel dans sa forme la plus fréquente. Selon un autre mode de réalisation de l'invention non représenté, le différentiel peut être de type « différentiel plat » où les pignons satellites et les pignons planétaires sont réalisés sous forme d'engrenages cylindriques, notamment des engrenages à denture droite, notamment des engrenages agencés sous la forme de train épicycloïdal.

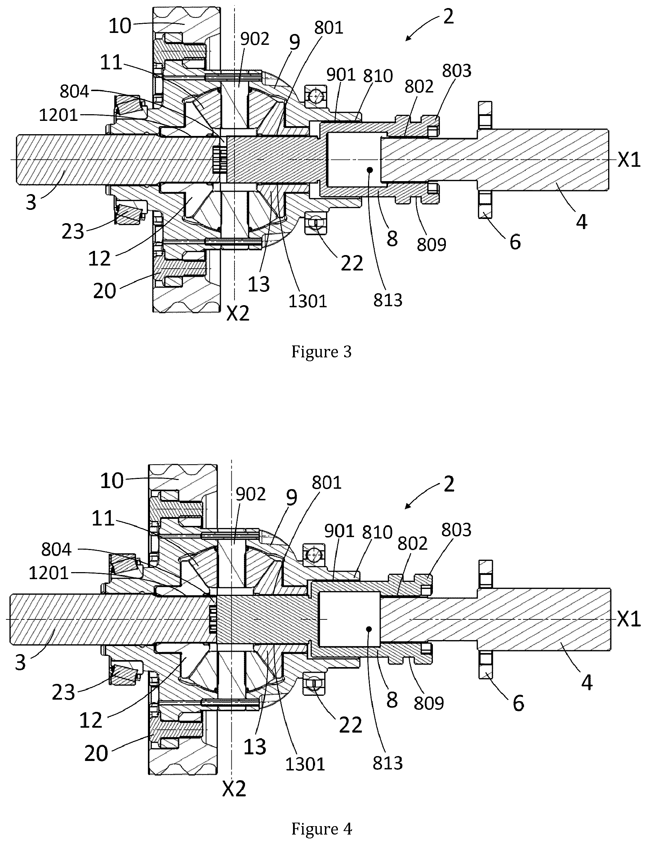

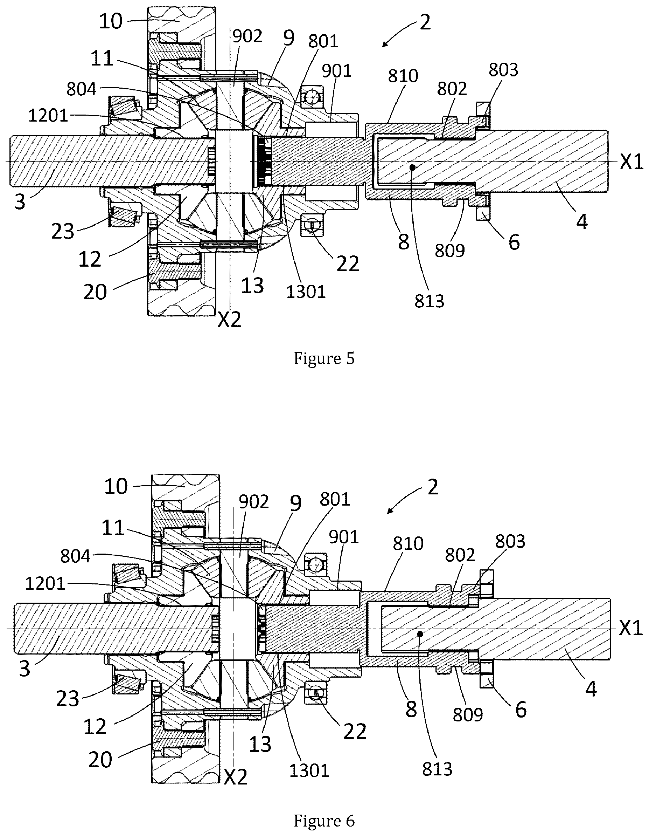

Le baladeur 8 est configuré pour occuper sélectivement quatre positions axiales : une position connectée illustrée en figure 3, une position bloquée illustrée en figure 4, une position parking illustrée en figure 5 et une position déconnectée illustrée en figure 6. Dans la position connectée, le baladeur 8 assure un couplage du deuxième arbre d'entraînement de roue 4 avec le deuxième pignon planétaire 13. Dans la position bloquée, le baladeur 8 assure un couplage du deuxième arbre d'entraînement de roue 4 avec le premier arbre d'entraînement de roue 3. Dans la position parking, le baladeur 8 est configuré pour assurer un couplage du deuxième pignon planétaire 4 avec un bâti fixe, qui est ici le carter de transmission 6. Dans la position déconnectée, le baladeur 8 n'assure pas de couplage du deuxième arbre d'entraînement de roue 4.

Le baladeur 8 est agencé pour être déplacé par un actionneur (non représenté). Le baladeur 8 peut comporter une gorge annulaire 809 coopérant avec une fourchette (non représentée) liée à l'actionneur. Un seul et unique actionneur est nécessaire pour déplacer le baladeur dans les quatre positions.

Afin de faciliter le coulissement axial du baladeur 8 sur une partie ou sur la totalité de son déplacement, une surface interne 901 du porte-satellite 9 peut assurer un centrage radial d'une surface externe 810 radialement externe du baladeur 8.

Comme illustré par les figures 3 à 6, les quatre positions axiales du baladeur 8 peuvent se succéder dans une séquence déterminée à mesure que le baladeur 8 s'éloigne suivant une direction opposée au premier pignon planétaire 12, la position bloquée étant la plus proche du premier pignon planétaire 12, la position connectée succédant ensuite à la position bloquée, la position déconnectée succédant ensuite à la position connectée et la position parking succédant ensuite à la position déconnectée.

Comme illustré dans le premier mode de réalisation des figures 2 à 6, le module de différentiel 2 peut comporter :
- une première liaison par coopération de formes par laquelle le baladeur 8 est lié en permanence en rotation au deuxième pignon planétaire 13 et par laquelle le baladeur 8 coulisse axialement par rapport au deuxième pignon planétaire 13 ;
- une deuxième liaison par coopération de formes par laquelle le baladeur 8 est couplé au deuxième arbre d'entraînement de roue 4 en positions connectée et bloquée, et par laquelle le baladeur 8 est découplé du deuxième arbre d'entraînement de roue 4 en position déconnectée ;
- une troisième liaison par coopération de formes par laquelle le baladeur 8 est configuré pour couplé à un bâti fixe, ici le carter de transmission 6, en position parking, et par laquelle le baladeur 8 est découplé du bâti fixe en positions connectée, déconnectée et bloquée ; et
- une quatrième liaison par coopération de formes par laquelle le baladeur 8 est couplé au premier arbre d'entraînement de roue 3 en position bloquée, et par laquelle le baladeur 8 est découplé du premier arbre d'entraînement de roue 3 en positions déconnectée, connectée et parking.

Dans le premier mode de réalisation des figures 2 à 7 :
- la première liaison par coopération de formes peut comprendre une première denture 801 de type externe orientée radialement aménagée sur le baladeur 8, la première denture 801 étant ici une cannelure mâle qui coopère avec une cannelure femelle 1301 aménagée sur le deuxième pignon planétaire 13 ;
- la deuxième liaison par coopération de formes peut comprendre une deuxième denture 802 de type interne orientée radialement, la deuxième denture 802 pouvant être aménagée dans une cavité 813 du baladeur 8 recevant une portion du deuxième arbre d'entraînement de roue 4 ;
- la troisième liaison par coopération de formes peut comprendre une troisième denture 803 de type crabot orientée en saillie axialement aménagée sur le baladeur 8 ;
- la quatrième liaison par coopération de formes peut comprendre une quatrième denture 804 de type crabot orientée en saillie axialement aménagée sur le baladeur 8.

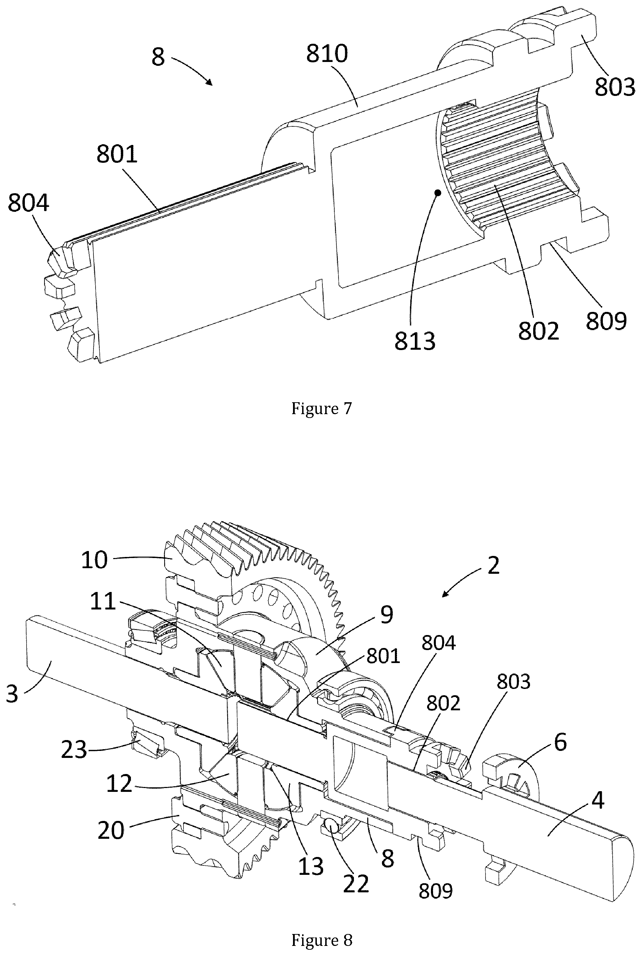

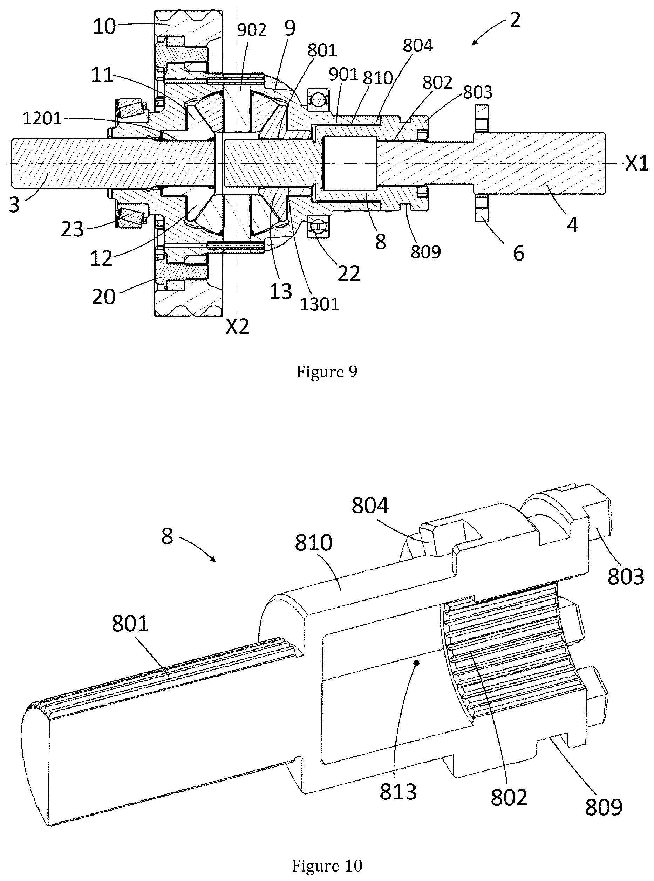

Les figures 8 à 10 illustrent un deuxième mode de réalisation du module de différentiel 2 qui diffère du premier mode de réalisation en ce que la quatrième liaison par coopération de formes est réalisée de telle sorte que baladeur 8 est couplé au porte-satellite 9 en position bloquée, et par laquelle le baladeur 8 est découplé du porte-satellite 9 en positions déconnectée, connectée et parking. La quatrième liaison par coopération de formes comprend une quatrième denture 804 de type crabot orientée en saillie axialement aménagée sur le baladeur 8.

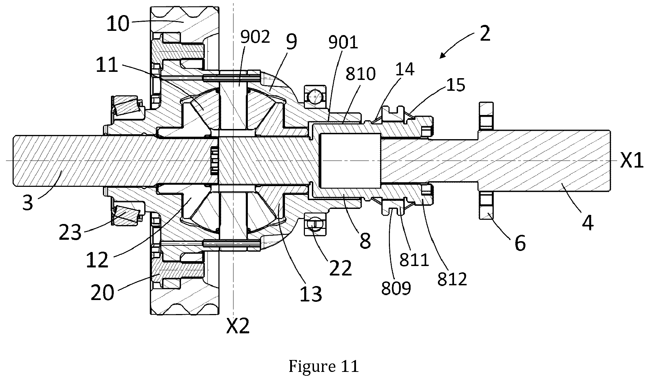

La figure 11 illustre un troisième mode de réalisation du module de différentiel 2 qui diffère du premier mode de réalisation en ce qu'un premier ressort d'assistance 14 peut être agencé pour exercer axialement un effort sur le baladeur 8 de manière à favoriser le passage de la position déconnectée à la position connectée et/ou de la position connectée à la position bloquée et un deuxième ressort d'assistance 15 est agencé pour exercer axialement un effort sur le baladeur 8 de manière à favoriser le passage de la position déconnectée à la position parking.

Dans le troisième mode de réalisation de la figure 11, le baladeur 8 peut comporter deux parties 811,812 axialement mobiles l'une par rapport à l'autre. La première partie 811 peut être configurée pour coopérer avec l'actionneur. La deuxième partie 812 peut être configurée pour assurer sélectivement le couplage dans les positions bloquée, connectée, déconnectée et parking. La première partie 811 peut être centrée radialement sur la deuxième partie 812. La première partie 811 peut être liée en rotation à la deuxième partie 812 par des dentures. Le premier et le deuxième ressort d'assistance 14,15 peuvent être interposés axialement entre la première et la deuxième partie 811,812. Le premier ressort d'assistance 14 peut être disposé axialement d'un premier côté de la première partie 811 et le deuxième ressort d'assistance 15 peut être disposé axialement d'un deuxième côté de la première partie 812, le premier côté étant plus proche axialement du premier pignon planétaire 12 que le deuxième côté.

Le premier et le deuxième ressort d'assistance 14,15 sont ici des rondelles tronconiques de type Belleville.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

L'usage du verbe « comporter », « comprendre » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Module de différentiel (2) pour un système de transmission d'un véhicule, le module de différentiel (2) ayant un premier axe de rotation (X1) et comprenant :
- un porte-satellite (9) apte à recevoir un couple fourni, directement ou indirectement, par un moteur de traction (5) ;
- au moins un pignon satellite (11) monté pivotant sur le porte-satellite (9) ;
- un premier et un deuxième pignons planétaires (12,13) pivotants autour du premier axe de rotation (X1) ;
- un premier et un deuxième arbres d'entraînement de roue (3,4) , le premier arbre d'entraînement de roue (3) étant lié en rotation au premier pignon planétaire (12) ; et
- un baladeur (8) mobile axialement suivant le premier axe de rotation (X1) entre au moins deux positions axiales distinctes ;
une première liaison par coopération de formes étant aménagée entre le baladeur (8) et le deuxième pignon planétaire (13), la première liaison par coopération de formes étant configurée de façon à ce que le baladeur (8) soit lié en permanence en rotation au deuxième pignon planétaire (13) et de façon à ce que le baladeur (8) coulisse axialement par rapport au deuxième pignon planétaire (13) entre les au moins deux positions axiales ;
**caractérisé en ce qu'**une deuxième liaison par coopération de formes est aménagée entre le baladeur (8) et le deuxième arbre d'entraînement de roue (4) de façon à assurer sélectivement :
- un couplage du deuxième pignon planétaire (13) avec le deuxième arbre d'entraînement de roue (4) dans une première position axiale du baladeur (8), dite position connectée ; et
- un découplage du deuxième arbre d'entraînement de roue (4) dans une deuxième position axiale du baladeur (8), dite position déconnectée.

2. Module de différentiel (2) selon la revendication 1, dans lequel la première liaison par coopération de formes comprend une cannelure mâle (801) aménagée sur le baladeur (8) et une cannelure femelle (1301) aménagée sur le deuxième pignon planétaire (13).

3. Module de différentiel (2) selon l'une quelconque des revendications précédentes, dans lequel une surface (901) du porte-satellite (9) assure un centrage radial d'une surface (810) du baladeur (8).

4. Module de différentiel (2) selon l'une quelconque des revendications précédentes, dans lequel la deuxième liaison par coopération de formes comprend une deuxième denture (802) aménagée dans une cavité (813) du baladeur (8) recevant une portion du deuxième arbre d'entraînement de roue (4), la deuxième denture (802) étant de préférence de type interne orientée radialement.

5. Module de différentiel (2) selon l'une quelconque des revendications précédentes, dans lequel une troisième liaison par coopération de formes est configurée pour être aménagée entre le baladeur (8) et un bâti fixe, notamment un carter (6), de façon à assurer sélectivement un couplage du deuxième pignon planétaire (13) avec le bâti fixe dans une troisième position axiale du baladeur (8) dite position parking, la troisième liaison par coopération de formes comprenant une troisième denture (803) aménagée sur le baladeur (8), la troisième denture (803) étant de préférence de type crabot orientée en saillie axialement.

6. Module de différentiel (2) selon l'une quelconque des revendications précédentes, dans lequel, dans une quatrième position axiale du baladeur (8) dite position bloquée, :
- une quatrième liaison par coopération de formes est configurée pour assurer sélectivement un couplage du deuxième pignon planétaire (13) avec le premier arbre d'entraînement de roue (3), la quatrième liaison par coopération de formes comprenant une quatrième denture (804) aménagée sur le baladeur (8), la quatrième denture (8) étant de préférence de type crabot orientée en saillie axialement ; ou
- une quatrième liaison par coopération de formes est configurée pour assurer sélectivement un couplage du deuxième pignon planétaire (13) avec le porte-satellite (9), la quatrième liaison par coopération de formes comprenant une quatrième denture (804) aménagée sur le baladeur (8), la quatrième denture (804) étant de préférence de type crabot orientée en saillie axialement.

7. Module de différentiel (2) selon l'une quelconque des revendications précédentes en combinaison avec les revendications 5 et 6, dans lequel les positions bloquée, connectée, déconnectée et parking du baladeur (8) se succèdent dans une séquence déterminée à mesure que le baladeur (8) s'éloigne suivant une direction opposée au premier pignon planétaire (12), la position bloquée étant la plus proche du premier pignon planétaire (12), la position connectée succédant ensuite à la position bloquée, la position déconnectée succédant ensuite à la position connectée et la position parking succédant ensuite à la position déconnectée.

8. Module de différentiel (2) selon l'une quelconque des revendications précédentes en combinaison avec la revendication 6, dans lequel un premier ressort d'assistance (14) est agencé pour exercer axialement un effort sur le baladeur (8) de manière à favoriser le passage en position connectée et/ou en position bloquée.

9. Module de différentiel (2) l'une quelconque des revendications précédentes en combinaison avec la revendication 5, dans lequel un deuxième ressort d'assistance (15) est agencé pour exercer axialement un effort sur le baladeur (8) de manière à favoriser le passage en position parking.

10. Module de différentiel (2) selon l'une quelconque des revendications précédentes, dans lequel le baladeur (8) est agencé pour être déplacé par un actionneur, le baladeur comportant notamment une gorge annulaire (809) coopérant avec une fourchette liée à l'actionneur.

11. Module de différentiel (2) l'une quelconque des revendications précédentes en combinaison avec les revendications 8 à 10, dans lequel :
- le baladeur (8) comporte deux parties (811,812) axialement mobiles l'une par rapport à l'autre ;
- la première partie (811) étant configurée pour coopérer avec l'actionneur ;
- la deuxième partie (812) étant configurée pour assurer sélectivement le couplage dans les positions bloquée, connectée, déconnectée et parking ; et
- le premier et le deuxième ressort d'assistance (14,15) étant interposés axialement entre la première et la deuxième partie (811,812).

12. Système de transmission comprenant le module de différentiel (2) selon l'une quelconque des revendications précédentes, un bâti fixe notamment un carter (6), un jeu d'engrenages (7) configuré pour faire coopérer en rotation le module de différentiel (2) avec un moteur de traction (5), et un actionneur configuré pour déplacer le baladeur (8).

13. Groupe motopropulseur (1) comprenant un moteur de traction (5) et un système de transmission de couple selon la revendication 12.
